# EUROPÄISCHE PATENTANMELDUNG

(11) **EP 0 583 488 A1**
(43) Veröffentlichungstag der Anmeldung: **23.02.1994**
(21) Anmeldenummer: 92112578.7
(22) Anmeldetag: 23.07.1992
(51) Int. Cl.: B01D 53/00, B01D 50/00

(54) **Verfahren zur biologischen Behandlung von Abgasen und Einrichtung zur Ausführung des Verfahrens**

(71) Anmelder: ISODRA isolierte Feindrähte GmbH Wildenkuhlen, D-58566 Kierspe (DE)
(72) Erfinder:
(74) Vertreter: Stratmann, Ernst, Dr.-Ing.

(57) **Zusammenfassung**

Beschrieben wird ein Verfahren zur biologischen Behandlung von Abgasen, insbesondere solchen, die Feinstaub und/oder Kohlenstoffpartikel enthalten, wobei die Abgase zunächst angefeuchtet und dann durch biologisches Filtermaterial (50) hindurchgeleitet werden, wobei das biologische Filtermaterial (50) ständig oder in bestimmten zeitlichen Abständen durch ein Auflockergerät mit einer in das biologische Filtermaterial (50) hineinreichenden Schnecke (110) mechanisch aufgelockert wird, um so die Wirksamkeit des Filtermaterials, das biologische Mikroorganismen enthält, zu regenerieren. Beschrieben wird auch eine Anlage, mit der dieses Verfahren ausgeführt werden kann.

## Beschreibung

Die Erfindung betrifft ein Verfahren zur biologischen Behandlung von Abgasen, insbesondere solchen, die Feinstaub und/oder Kohlenstoffpartikel enthalten, wobei die Abgase zunächst angefeuchtet und dann durch biologisches Filtermaterial hindurchgeleitet werden. Ein solches Verfahren ist bereits aus der Gebrauchsmusterschrift G 91 00 858.1 der Anmelderin bekannt. Wie dort ausgeführt wird, lassen sich mit Hilfe von Mikroorganismen, die sich in einem biologischen Filter oder in einem biologischem Beet befinden, bestimmte chemische Bestandteile eines gasförmigen Produktes abbauen und so verändern, daß sie ihre störenden Eigenschaften, wie Geruchsbelästigung, Toxizität und dgl. verlieren.

Gegenüber chemischen Verfahren und katalytischen Verfahren, die ebenfalls bereits eingesetzt wurden, hat dieses biologische Verfahren schon Vorteile: Zum einen entfällt der bei einem katalytischen Verfahren notwendige Energieverbrauch, der dadurch anfällt, daß die Gase zur katalytischen Reaktion auf eine erhöhte Temperatur von einigen 100° gebracht werden müssen, wobei ein derartiger Energieverbrauch letztlich eine Umweltbelastung darstellt, da diese Energie zunächsteinmal erzeugt werden muß und dafür andere schädliche Abgase erzeugt werden. Bei der chemischen Behandlung von Abgasen gibt es die Nachteile, daß zum einen chemische Ausgangsstoffe zur Verfügung gestellt werden müssen, und daß nach der chemischen Reaktion mit den Abgasen entsprechende andere chemische Endstoffe entstehen, die wiederum u. U. Probleme bei ihrer Beseitigung verursachen können.

Demgegenüber hat die biologische Behandlung von Abgasen den Vorteil, daß mit verhältnismäßig geringem Energieaufwand die Behandlung erfolgt, und daß die für die Behandlung benötigten Ausgangsmaterialien (wie die Biomasse, die mit den Mikroorganismen dotiert ist, desweiteren ggf. Wasser zur Anfeuchtung der Biomasse) verhältnismäßig preiswert und umweltverträglich sind, genauso wie die am Ende des Prozesses anfallenden Abfallstoffe (verbrauchte Biomasse) in erheblich einfacherer Weise beseitigt oder auch sogar wiederverwendet werden können.

Besondere Probleme hat es bisher bei biologischen Verfahren gegeben, wenn dem zu behandelndem Gas Kohlenstoffpartikel oder sonstige Feinstoffteilchen beigefügt sind, die bei der Verbrennung von festem Brennmaterialien in einem Ofen auftreten können. Dies können Heizöfen sein, wie sie im Privathaushalt angewendet werden, aber auch Industrieöfen, wo bei bestimmten Verfahrensabläufen Abgase entstehen, die nicht nur geruchsbelästigende oder sogar schleimhautreizende Gasbestandteile haben, sondern auch Feinstaub- und Kohlenstoffpartikel enthalten, die mit dem Abgas bei dem Abziehen aus dem Ofen mitgerissen werden. Ein solcher Fall ist der Trocknungsofen, der bei der Herstellung von kunststoffbeschichteten Feindrähten eingesetzt wird, wobei ein dünner Kupferdraht mit einem bestimmten Lack beschichtet und anschließend durch den Trocknungsofen mit der Temperatur von mehreren 100° C geführt wird, ggf. auch mehrfach, in welchem Trocknungsofen das beim Trocknungsvorgang entstehende Gas als Abgas anfällt und zu beseitigen ist.

Man kann zwar diese Abgase über hohe Schornsteine entsorgen, oder auch mittels eines Katalyseverfahrens unter Anwendung eines Katalysators und gleichzeitige Erhitzung des Abgases, wodurch störende Bestandteile beseitigt werden. Diese Verfahrensweise ist entweder direkt stark umweltbelastend, oder aber auch infolge Energie- und Materialverbrauch zumindest indirekt umweltbelastend und im letzten Falle auch kostenintensiv.

Besser geeignet ist da die in dem genannten Gebrauchsmuster verwendete Methode, bei der mit Hilfe eines biologischen Filters gearbeitet wird. Bei dem genannten Verfahren dieser Gebrauchsmusteranmeldung hat sich jedoch ergeben, daß die Wirksamkeit des biologischen Filtermaterials noch zu schnell nachläßt und dadurch die Kosten des Verfahrens noch zu hoch sind.

Aufgabe der Erfindung ist es, das bekannte Verfahren dahingehend weiterzubilden, daß die Wirksamkeit des biologischen Filtermaterials länger vorhält und dadurch die Kosten des Verfahrens noch weiter gesenkt werden können.

Gelöst wird diese Aufgabe durch die kennzeichnenden Merkmale des Hauptanspruches, nämlich dadurch, daß das biologische Filtermaterial ständig oder in bestimmten zeitlichen Abständen mechanisch aufgelockert wird.

Durch diese Maßnahme wird erreicht, daß die Biomasse wesentlich länger wirksam bleibt und im wesentlich größeren Abständen erst ausgetauscht werden muß, was die Kosten des Verfahrens drastisch reduziert.

Es ist günstig, wie bereits in dem Gebrauchsmuster geschildert, das biologische Filtermaterial durch natürliches oder künstliches Beregnen, wie Besprühen mit Wasser, auf einer bestimmten Feuchtigkeit zu halten. In diesem Falle ist es von Vorteil, wenn das Zuführen von Wasser vor oder während des Auflockerns des biologischen Filtermaterials erfolgt, weil dadurch eine besonders gleichmäßige Einbringung des Wassers (oder der sonstigen wasserhaltigen Flüssigkeit) in das biologische Filtermaterial ermöglicht wird.

In der Verfahrensweise des Standes der Technik wird die Feuchtigkeit des Filtermaterials durch Messung von dessen elektrischem Widerstand ermittelt. Wie ermittelt werden konnte, spielt für den elektrischen Widerstand aber auch die Dichte des Filtermaterials eine Rolle, so daß eine Messung des elektrischen Widerstandes des Filtermaterials auch dazu verwendet werden kann, den Zeitpunkt des Auflockerns festzulegen.

Alternativ kann der Zeitpunkt des Auflockerns auch durch Messung des Feuchtigkeitsgehaltes und/oder Schadstoffgehaltes des aus der Biomasse austretenden und gereinigten Gases ermittelt werden, weil bei Nachlassen der Wirksamkeit und der damit entstehender Notwendigkeit des Auflockerns sich die Eigenschaften des durch das Filtermaterial hindurchgetretenen Gases ändern, was beispielsweise durch Messung des Feuchtigkeitsgehaltes und/oder Schadstoffgehaltes des Gases ermittelt werden kann.

Der Zeitpunkt kann aber auch durch Messung des Druckabfalls des zu reinigenden Gases in der Biomasse ermittelt werden, weil wiederum durch erhöhte Dichte der Biomasse sich deren Gasdurchlaß-Widerstand verändert, insbesondere erhöht.

Zur Ausführung des Verfahrens läßt sich eine Einrichtung zur biologischen Behandlung von Abgasen schaffen, die aus einer Kammer besteht, in die das Abgas gegen einen Sprühstrahl aus einer Anfeuchtungsflüssigkeit, wie Wasser, mittels eines Gebläses eingeblasen wird, und mit einem der Kammer über eine Leitung (Gasrohr oder Gaskanal) nachgeschaltetem biologischem Filterbett, in dem durch Mikroorganismen störende, insbesondere stark riechende Bestandteile der Abgase biologisch abgebaut werden. Eine derartige Einrichtung, wie sie aus dem Stand der Technik bekannt ist, läßt sich dadurch verbessern, daß im Bereich des Filterbettes eine mechanische Auflockereinrichtung vorgesehen wird. Diese Einrichtung kann Meßeinrichtungen für den Feuchtegehalt, den elektrischen Widerstand, den Gasdruckabfall und/oder ansteigenden Gehalt an störenden Bestandteilen innerhalb der Filtermasse oder des gereinigten Gases zur Feststellung der Dichte des Filtermaterials und dessen sonstigen Eigenschaften vorgesehen sein.

Die Einrichtungen können, wie beim Stand der Technik ein Filterbett umfassen, das aus einer Wanne mit einem Boden (z. B. einem Siebboden) sowie im Boden (oder zwischen Boden und Siebboden) angeordneten Gaszuführungskanälen besteht, sowie mit einem Abfluß oder Sumpf für abgeschiedene Flüssigkeit, und einer Filterbettfüllung mit biologisch wirksamer Filtermasse, die aus mit Mikroorganismen dotierter feuchter Erde bestehen mag. Erfindungsgemäß ist eine derartige Filterwanne so erweitert, daß oberhalb der Wanne eine Werkzeugführung vorgesehen ist, mittels der eine Auflockereinrichtung so angeordnet werden kann, daß sie die Filterbettfläche in Quer- und/oder Längsrichtung oder auch radial bestreichen kann, wobei die erste Möglichkeit für rechteckige Filterbettanordnungen geeignet sind, während die letztere Möglichkeit für runde Filterbetten günstig ist.

Das Filterbett kann, wenn es rechteckig ist, zwischen zwei zueinander parallel verlaufende Anschlußwände angeordnet werden, auf oder längs deren Oberkanten eine die Abschlußwände querende Traverse oder Brücke mittels Rollen verschieblich geführt sein könnte, welche Traverse ihrerseits eine Führung für einen entlang der Traverse verschieblichen Schlitten oder Katze bildet, von dem ein nach unten in das Filterbettmaterial reichendes Auflockerungswerkzeug ausgeht.

Durch diese Anordnung ist es somit möglich, das Filterbett und das darin enthaltende Filterbettmaterial in allen Bereichen mit Hilfe des Auflockerungswerkzeuges in Eingriff zu nehmen und aufzulockern.

Es hat sich als besonders günstig erwiesen, wenn das Auflockerwerkzeug eine von einem Motor um ihre Achse drehbare Schnecke bildet , die in das Filterbett hinein bis an den Filterbettboden reicht, so daß das gesamte Material von der Filterbettoberfläche bis zum Filterbettboden durch die Schnecke aufgelockert werden kann, beispielsweise dadurch, daß es im Bereich der Schnecke nach oben gefördert wird und dann anschließend seitlich von der Schnecke wieder nach unten fällt und dabei eine lockerere Konsistenz erhält, als es vorher der Fall war. Außerdem entsteht dabei ein Mischvorgang, der ebenfalls günstig ist.

Der Auflockervorgang läßt sich beschleunigen, wenn mehrere Schnecken gleichzeitig angeordnet werden, wobei es meistens ausreicht, wenn zwei Schnecken vorgesehen werden, die vorzugsweise gegenläufig betreibbar sind. Durch die Gegenläufigkeit wird die auf die Schlittenführung ausgeübte Kraft infolge der Drehung der Schnecken verkleinert.

Wenn zwei Schnecken verwendet werden, ist es günstig, wenn diese zwischen sich die Traverse (oder eine Strebe dieser Traverse) aufnehmen, weil dadurch die auf die Traverse ausgeübte Kraft im wesentlichen symmetrisch ist und dadurch leichter aufgenommen werden kann, weil die dabei auftretenden Biegemomente kleiner bleiben. Es kann auch günstig sein, eine zweite Traverse vorzusehen, um Drehmomentkräfte aufzunehmen und die erste Traverse dadurch zu entlasten.

Der Schlitten oder die Katze wird vorzugsweise mittels zumindest zweier Auflagerrollen auf der Oberseite der ersten, Rechteckquerschnitt aufweisenden Traverse verschieblich gelagert, und vorzugsweise mittels mindestens einer, vorzugsweise jeweils zweier weiterer Führungsrollen pro Seite an den beiden Seitenkanten der Traverse verschieblich geführt, was eine besonders reibungsarme Lagerung und gleichwohl eine Lagerung darstellt, die hohe Drehmomente aufnehmen kann. Zusätzlich kann der Schlitten sich ggf. noch auf einer zweiten Strebe abstützen, wenn diese vorhanden ist.

Als besonders robust hat sich der Antrieb mittels Kettenrädern erwiesen, die in Ketten eingreifen, wobei zumindest eine Kette parallel zu eine Abschlußwand verläuft, während zumindest eine zweite Kette mit ihren Enden entlang den Traversen beweglich und am Schlitten befestigt ist, wobei jeweils an den Enden der Traversen die Kette um ein Kettenrad herumgeführt ist, von denen zumindest eines mit einem Antriebsmotor, insbesondere mit einem Elektromotor verbunden ist.

Durch Drehung der Ketten mittels des Elektromotors erfolgt somit eine Verschiebung entweder parallel zu den Abschlußwänden oder senkrecht dazu, so daß letztlich jeder Punkt der zwischen den Abschlußwänden befindlichen Fläche, die das Filterbett bildet, für das Auflockerwerkzeug erreichbar ist.

Die Schneckenräder können eine hohle Welle umfassen und an ihrem oberen Ende eine Einführung für Befeuchtungsflüssigkeit (wie Wasser) aufweisen, um auf diese Weise die Möglichkeit zu haben, Wasser auf die Schnecken auffließen zu lassen, während der Auflockervorgang stattfindet, so daß das Auflockern und Befeuchten in einem Arbeitsgang erfolgt, wobei oberhalb des oder im Bereich der Schnecke Radialöffnungen zum Austritt der Flüssigkeit in die Biomasse vorgesehen sein könnten.

Oberhalb der Schnecke kann im übrigen ein oder auch mehrere radial sich erstreckende Flügel angeordnet sein, die keine Förderrichtung nach oben bewirken, sondern lediglich eine seitwärts bzw. radial nach außen gerichtete Bewegung für das Fördergut, so daß das durch die Schnecke nach oben geförderte Biomassenmaterial an dieser Stelle statt weiter nach oben nunmehr seitwärts ausgeworfen wird und dadurch an der Schnecke vorbei wieder nach unten fallen kann.

Die Erfindung wird nachfolgend anhand von Ausführungsbeispielen näher erläutert, die in den Zeichnungen dargestellt sind.

Es zeigt:
- Fig. 1: ein schematisches Diagramm zur Erläuterung der allgemeinen Arbeitsweise des erfindungsgemäßen Verfahrens sowie deren zugehöriger Einrichtung;
- Fig. 2: eine genauere Darstellung des in Fig. 1 zu erkennenden biologischen Filterbettes mit einer Einrichtung zur Auflockerung des Filtermaterials;
- Fig. 3: eine senkrecht zur Zeichenebene gemäß Fig. 2 gelegte Schnittansicht durch das Filterbett gemäß Fig. 2;
- Fig. 4: eine teilweise abgeschnittene Draufsicht auf das Filterbett gemäß Fig. 1, bei entferntem Filtermaterial;
- Fig. 5: in einer Ansicht von links gemäß Fig. 2 in vergrößerter Detaildarstellung die Schneckeneinrichtung des in Fig. 2 dargestellten Auflockergeräts;
- Fig. 6: eine Draufsicht auf die linke Hälfte des in Fig. 2 dargestellten Auflockergerätes;
- Fig. 7: eine Draufsicht auf die rechte Hälfte;

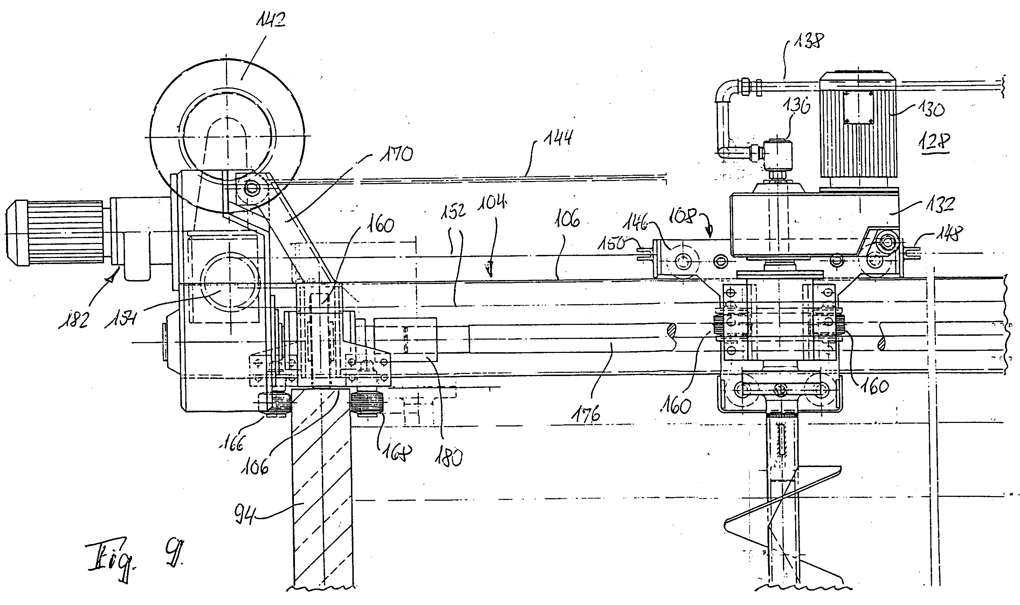

- Fig. 8: eine Seitenansicht der gemäß Fig. 2 rechten Hälfte, jedoch mit vergrößerter Darstellung und mehr Einzelheiten;
- Fig. 9: eine Seitenansicht gemäß Fig. 2, wiederum vergrößert und mit mehr Details;
- Fig. 10: eine Ansicht von links auf die Anordnung von Fig. 6; und
- Fig. 11: eine gegenüber Fig. 5 um 90° gedrehte Ansicht der Schnecke.

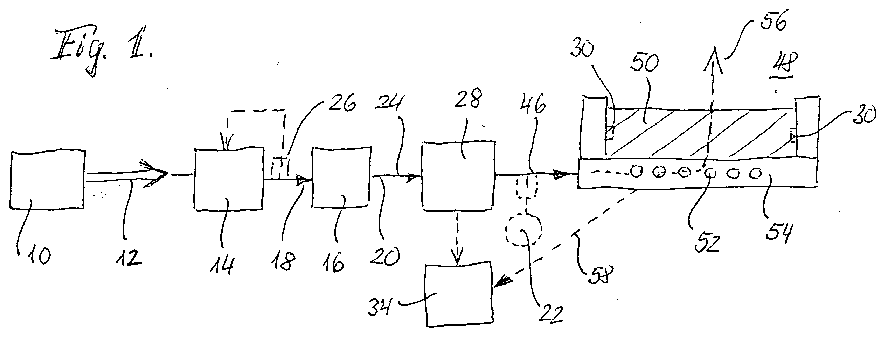

In Fig. 1 ist schematisch die Arbeitsweise einer erfindungsgemäß ausgebildeten Einrichtung zur biologischen Behandlung von Abgasen, insbesondere solchen, die Feinstaub und/oder Kohlenstoffpartikel enthalten, dargestellt. Die Anlage, die das zu behandelnde Abgas erzeugt, ist mit 10 bezeichnet und kann einen Ofen darstellen, in dem beispielsweise Lackschichten auf einem Kupferdraht eingebrannt werden, bei welchem Vorgang Abgase frei werden, die beispielsweise stark riechende oder die die Schleimhaut von Augen, Nase und Mund reizende Abgasbestandteile enthalten. Weitere Bestandteile sind bei bestimmten Arbeitsvorgängen auch Feinstaubpartikel, insbesondere auch Kohlenstoffpartikel, wobei letztere insbesondere bei der erwähnten Lackdrahtaushärtung entstehen.

Diese dort erzeugten Abgase gelangen über ein Rohrleitungssystem 12 in eine erste Filtervorrichtung 14, in der die festen, mitgerissenen Feinstaub- und/oder Kohlenstoffpartikel aufgefangen werden, vorzugsweise alle solche, die einen Durchmesser von mehr als 1 x 10⁻⁶ m aufweisen.

Der Transport in dem Rohrleitungssystem 12 wird beispielsweise dadurch bewerkstelligt, daß in dem Rohrleitungssystem ein Unterdruck aufrechterhalten wird, so daß eventuelle Undichtigkeiten des Rohrleitungssystems nicht dazu führen, daß Teile der Abgase austreten. Der Unterdruck wird hier bei der dargestellten Ausführungsform gemäß Fig. 1 durch einen Saugventilator 16 erzeugt, der an seiner Eintrittsseite 18 Luft ansaugt und dadurch in dem Rohrleitungssystem hinter dem Filter 14 und damit aber auch vor dem Filter 14 in dem Rohrleitungssystem 12 einen Unterdruck gegenüber der Umgebungsluft erzeugt, um dann am Ausgang 20 das angesaugte Gas mit Überdruck in ein weiteres Rohrsystem 24 weiterzutransportieren. Ein Druckmeßfühler 26 vor und/oder hinter dem Filter 14 kann einerseits den Ventilator 16 so steuern, daß im Rohrleitungssystem 12 ein gewünschter Unterdruck aufrechterhalten bleibt, andererseits eine ausreichende Durchlässigkeit des Filters 14 überwacht wird.

Über das Rohrsystem 24 gelangt das nunmehr unter Überdruck stehende Gas in eine Wascheinrichtung 28, siehe beispielsweise den eingangs genannten Stand der Technik, und wird mittels im Gegenstrom angeordneten Sprühstrahlen angefeuchtet und gleichzeitig von eventuell noch vorhandenen Resten von Staub und Feinstoffpartikeln weitgehend befreit. Überschüssige Sprühflüssigkeit läßt sich in einem Sumpf 34 sammeln und ggf. über Pumpeinrichtungen, hier nicht näher dargestellt, in den Sprühflüssigkeitskreislauf zurückführen. Die durch die Waschanlage 28 gewaschene und angefeuchtete Abgasströmung, die noch mittels Beruhigungseinrichtungen von großtropfigen, mitgerissenen Sprühflüssigkeitsresten befreit werden kann, gelangt dann über eine Leitung 46 in ein Filterbett 48, in dem biologische Filtermasse 50 angeordnet ist, welche Filtermasse auf porösen Stützplatten 54 ruht, die zum einen das Gas zu der Filtermasse 50 gelangen läßt, andererseits aus der Filtermasse austretende Flüssigkeit aufzufangen in der Lage sind, um diese dann in eine geeignete Auffangvorrichtung abzuführen, beispielsweise in den bereits erwähnten Sumpf 34. Nach dem Durchtritt des Gases durch die biologische Filtermasse 50 ist dieses Gas soweit gereingt, daß es normalerweise der freien Atmosphäre zugeführt werden kann, siehe den Pfeil 56.

Die überschüssige Feuchtigkeit, beispielsweise erzeugt durch mit dem Gasstrom 46 mitgerissene Tröpfchen, fließt vorzugsweise in Richtung der Schwerkraft durch die porösen Platten 54 in einen Kanal 52, der beispielsweise in Form von Rinnen ausgebildet ist oder ein Rohrsystem darstellt, und wo dann über einen Kanal 58 die Rückführung in den bereits erwähnten Sumpf 42 erfolgen könnte.

Die in dem Sumpf 34 angesammelte Flüssigkeit könnte, wie schon erwähnt, dem Sprühwasser wieder zugeführt werden, oder aber, falls dies unzweckmäßig erscheint, auf andere Weise behandelt oder entsorgt werden.

Das insoweit beschriebene Verfahren ist aus der eingangs genannten Gebrauchsmusterschrift bereits im wesentlichen bekannt.

Es hat sich nun gezeigt, daß das biologische Filtermaterial 50 in dem Filterbett 48 nach verhältnismäßig kurzer Zeit keine ausreichende Wirksamkeit mehr hat. Man kann das dadurch beheben, daß das Filtermaterial aus dem Filterbett entfernt, und durch neues ersetzt oder aufbereitet und erneut in das Filterbett eingebracht wird. Dies ist jedoch verhältnismäßig umständlich und es wurde gefunden, daß das Filtermaterial auch auf einfachere Weise wieder aktiviert werden kann, indem nämlich erfindungsgemäß das biologische Filtermaterial ständig oder zumindest in bestimmten zeitlichen Abständen mechanisch aufgelockert wird. Dies kann durch Umschaufeln von Hand erfolgen, oder, günstiger, mittels Auflockereinrichtungen, die mit dem Filterbeet bei Bedarf verbunden werden können, oder aber mit diesem ständig in Verbindung stehen. Auf diese Einrichtung wird im folgenden noch näher eingegangen.

Die Wirksamkeit des biologischen Filtermaterials läßt sich durch natürliches oder künstliches Beregnen, wie Besprühen mit Wasser, auf eine bestimmte Feuchtigkeit bringen und auf dieser auch halten, was für die Mikroorganismen in dem biologischen Filtermaterial optimale Lebensbedingungen schafft, wie bereits in dem Stand der Technik ausgeführt wird. Bei Anwendung der erfindungsgemäß neu hinzugekommenen mechanischen Auflockerung ist es günstig, wenn das Beregnen vor oder während des Auflockerns des Filtermaterials erfolgt, was beispielsweise wiederum von Hand erfolgen kann, oder aber durch entsprechende Anordnungen der Auflockereinrichtung, falls diese vorhanden ist.

Wird der Auflockerungsvorgang nur in bestimmten zeitlichen Abständen durchgeführt, ist es günstig, diese Abstände dadurch festzulegen, daß beispielsweise der Feuchtigkeitsgehalt in dem Filtermaterial festgestellt wird, oder aber auch der Schadstoffgehalt des aus dem Filtermaterial austretenden gereinigten Gases, weil dieser Schadstoffgehalt ein Indiz für die Wirksamkeit der das Filtermaterial ausmachenden Biomasse ist.

Da das Auflockern eines zu dicht gewordenen Materials ein wesentlicher Gesichtspunkt der Regenerierung des Filtermaterials darstellt, kann u. U. auch eine Messung des Druckabfalls des zu reinigenden Gases in dem Filtermaterial als Indiz für die Notwendigkeit des Regenerierens dienen, zu welchem Zweck es möglicherweise von Vorteil ist, mit Hilfe von entsprechenden Meßeinrichtungen diesen Druckabfall festzustellen.

Dazu könnte beispielsweise eine Druckmeßeinrichtung 22 im Leitungssystem 46 dienen, die die Druckdifferenz zum Umgebungsdruck feststellt und bei Übersteigen einer bestimmten Druckdifferenz ein Alarmsignal ausgibt oder den Auflockervorgang automatisch in Betrieb setzt.

Zur Messung der elektrischen Widerstandsfähigkeit der Biomasse könnten andererseits Elektroden 30 an geeigneten Stellen des Filterbetts angeordnet werden, an welchen Elektroden 30 eine elektrische Spannung angelegt werden könnte, die zu einem Strom durch das Filterbett hindurch führt, dessen Stärke eine Anzeige für den elektrischen Widerstand des Filtermaterials und damit ein Indiz für bestimmte, für dessen Wirksamkeit wichtige Eigenschaften darstellt.

Dieser Strom könnte wiederum dazu dienen, eine Alarmeinrichtung zu bedienen oder die Auflockereinrichtung in Betrieb zu setzen.

Wie genauer aus der Fig. 2 hervorgeht, besteht das Filterbett 48 aus einer Wanne 90, die aus einem Boden 92 und Seitenwänden 94 besteht, wobei in einer Bodeneinsenkung zwischen den beiden Wänden 94 mehrere aneinanderstoßende Platten 96 angeordnet sind, die zum einen in sich porös sind, zum anderen mit mehreren jeweils parallelen Kanälen 98 ausgestattet sind, die mit entsprechenden Kanälen von angrenzenden Platten fluchten und daher entlang der Bodenebene ein Kanalsystem bilden, das zur Zufuhr von zu behandelndem Gas dienen kann, das den Kanälen zugeführt wird und durch die Porösität der Platten nach außen dringt und damit - durch ein ggf. vorhandenes Kiesbett 100 hindurch - in die biologisch aktive Filtermasse oder Filtermaterial 50 eindringt und durch dieses Filtermaterial von unten nach oben geführt wird, um schließlich an der Oberfläche 102 nach außen auszutreten.

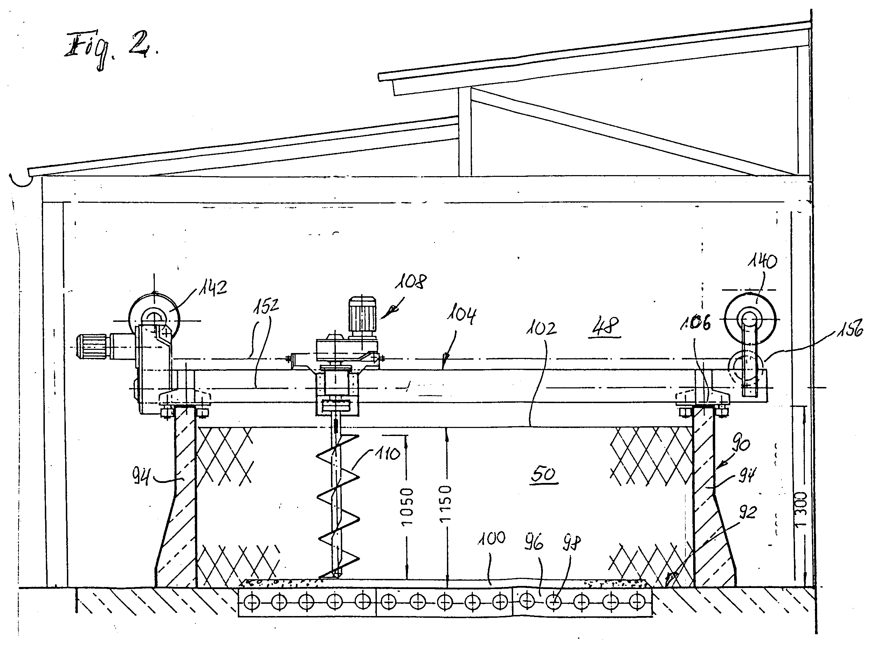

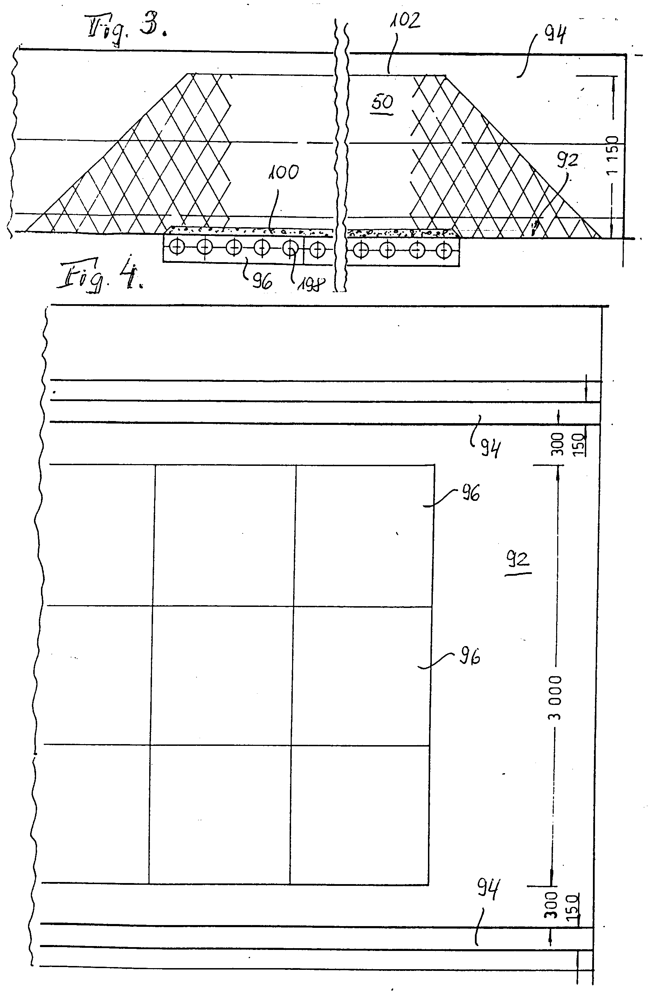

Wie Fig. 3 erkennen läßt, eine senkrecht zur Zeichenebene der Fig. 2 liegende Schnittansicht durch das Filtermaterial 50, können die Platten 96 auch in dieser Richtung mit Längsdurchbrüchen 198 ausgestattet sein, so daß sich ein Röhrennetz ergibt, das sich kreuzt und somit die gesamte von den Platten 96 gebildete Fläche, siehe die Fig. 4, miteinander strömungsmäßig verbindet.

Fig. 3 läßt erkennen, daß - zur Erleichterung des Einbringens und Ausfahrens der biologischen Filtermasse 50 - an den Längsenden des Filterbettes das Filtermaterial in voller Höhe nur bis zum Ende der Platten 96 reicht und danach mit einem bestimmten Winkel abfällt, der vorzugsweise dem auf natürliche Weise beim Aufschütten entstehenden Schüttwinkel des Materials entspricht. Wie zu erkennen ist, ist gleichwohl der von dem zu behandelnden Gas durch das Filtermaterial hindurch zurückzulegende Weg auch im Bereich dieses Schüttwinkels nicht wesentlich kürzer, als der direkt nach oben weisende Weg bis zur Oberfläche 102 des biologischen Filtermaterials.

Es hat sich als besonders zweckmäßig erwiesen, die Höhe des Filterbettes, also die Höhe der Ebene 102 über der Ebene des Bodens 92, größer als etwa 1 Meter zu wählen, um so einen günstigen Kompromiß zwischen benötigter Filtermaterialmenge einerseits und Wirksamkeit des Filters andererseits zu erhalten. Die hier gewählte spezielle Höhe beträgt 1150 mm, jedoch ist dies nur ein Beispielswert.

Die einzelnen Platten 96 haben in dem hier dargestellten Beispiels Abmessungen von auch wiederum 100 x 100 cm, so daß die gemäß Fig. 4 dargestellte Anordnung von drei Platten nebeneinander eine Breitenerstreckung von 3 m ergibt, wobei bis zu den Wänden noch ein kleiner Abstand von etwa 10 % dieser Entfernung vorgesehen ist, so daß sich insgesamt eine Wandentfernung von 3,60 m ergibt. Auch diese Werte sind jedoch nur als Beispiele zu verstehen, die sich als besonders günstig bei der praktischen Auführungsform erwiesen haben.

Die Längserstreckung, die in den Fig. 3 und 4 nicht dargestellt ist, kann an sich je nach gewünschtem Gasdurchsatz beliebig gewählt werden, wobei die Mindestlänge jedoch der Breite des Filterbettes entsprechen sollte, günstiger ist jedoch eine größere Länge als es der Breite entspricht, beispielsweise die doppelte oder dreifache Breite, so daß die Gesamtlänge der von den Platten 96 angenommenen Fläche beispielsweise 9 m betragen würde. Bei einer Breite von 3 m wäre somit die Zutrittsfläche für Gas in das Filterbett 3 m x 9 m oder 27 m². Diese flächenmäßige Ausgestaltung ist besonders geeignet, um nicht von Hand, sondern mit einer maschinellen Auflockerungseinrichtung das Filterbett zu bearbeiten, wie es in den Fig. 2 und folgenden nunmehr näher erläutert werden soll.

Gemäß Fig. 2 besteht das Auflockergerät aus einer Brücke 104, die mit ihren Enden auf Schienen 106 rollend gelagert ist, welche Schienen von den Oberkanten der Wände 94 gebildet sein können. Die Brücke ist so ausgestaltet, daß sie mittels Antriebseinrichtungen entlang der gesamten Erstreckung längs der Wände 94 des Filterbettes 50 verfahren werden kann.

Die Brücke 104 trägt ihrerseits eine entlang der Brücke verfahrbare Katze 108, von der ein Schneckenpflug 110 in die Filtermasse 50 hineinreicht, vorzugsweise bis zu der Schicht 100, die aus (ggf. mittels Zement verfestigtem) porösem Kies besteht.

Die Anordnung ermöglicht somit, den Schneckenpflug 110 über die gesamte Fläche des biologischen Filterbettes zu verfahren und somit jeden Punkt des Filtermaterials zu erreichen und mittels des Auflockergerätes, nämlich durch Betätigung (Drehung) des Schneckenpfluges aufzuwühlen und aufzulockern.

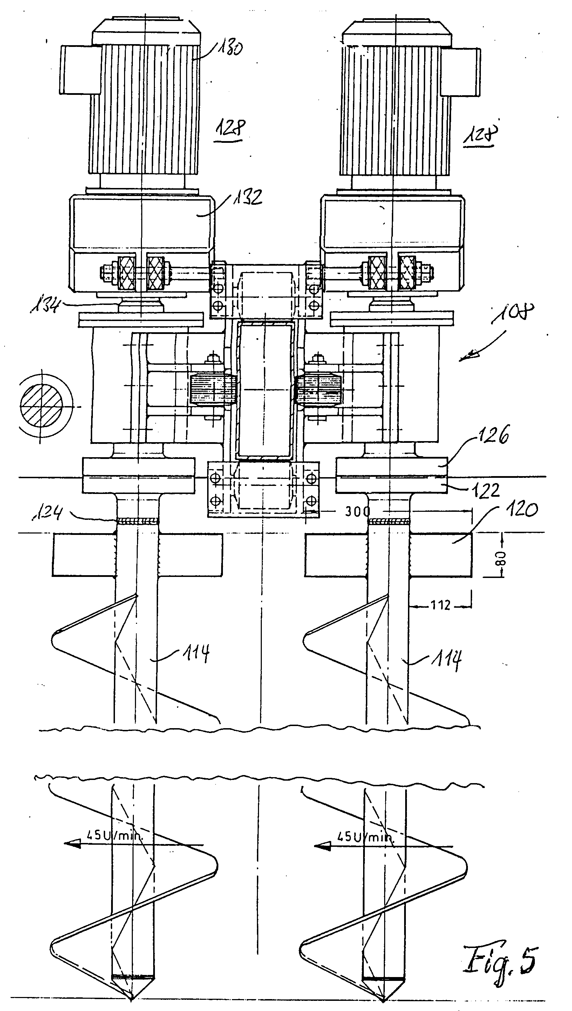

Der Schneckenpflug ist in Fig. 5 in einer Ansicht und in Fig. 11 in einer senkrecht dazu liegenden Ansicht zu erkennen, wobei insbesondere in Fig. 11 zu sehen ist, daß am unteren Ende des Schneckenpfluges 110 ein pflugscharartiges Ende 112, das parallel zur Oberfläche der Schicht 100 verläuft, entlang dieser Oberfläche bei Drehung des Schneckenpfluges 110 um die Achse 114 entlangschabt und so auf der Oberfläche der Schicht 100 liegendes Filtermaterial von dieser Fläche abhebt und auf die spiralförmig nach oben verlaufende Fläche 116 der Schnecke 110 aufschiebt. Mit weiterer Drehung des Schneckenpfluges 110 um die Achse 114 (von oben in Uhrzeigerreichtung gesehen) wird das Material dann weiter und weiter nach oben befördert, bis es das Ende 118 des Schneckenweges erreicht hat, wo es dann von zwei von der Welle 114 ebenfalls getragenen Flügeln 120 radial nach außen geschoben wird. Vorzugsweise wandert mit der Drehung des Schneckenpfluges 110 gleichzeitig die Katze entlang der Brücke mit einer bestimmten Geschwindigkeit, so daß immer neues Material von dem Schneckenpflug erfaßt und nach oben befördert wird, wobei der Erfassungsbereich an der Vorderseite der Bewegungsrichtung des Pfluges liegt, während auf der Rückseite durchgewühltes und aufgelockertes bzw. nach oben gefördertes Material wieder nach unten fällt und dort in gelockerter Form liegen bleibt.

Die Schneckengangsteigung sollte etwa gleich dem Schneckendurchmesser sein, und die Gesamtgröße der Schnecke sollte in einem bestimmten Verhältnis zur Höhe des Filterbettes stehen, derart, daß auf die Filterbetthöhe etwa 3 bis 4 Schneckengänge bzw. Schneckenwindungen fallen. Bei den hier beispielhaft vorgesehenen Abmessungen führt dies dazu, daß die Ganghöhe der Schnecke etwa 30 cm beträgt, entsprechend auch der Durchmesser der Schnecke, so daß auf die Gesamtschnecke hier 3,5 Schneckengänge entfallen.

Das die Schneckenfläche 116 bildende Material ist vorzugsweise Stahlblech, das auf ein Stahlrohr 120 spiralförmig aufgeschweißt ist, wie Fig. 11 (aber auch Fig. 5) deutlich erkennen läßt. Der Durchmesser des Rohres ist dabei im wesentlichen nur bestimmt durch die Tatsache, daß eine ausreichende Steifigkeit vorhanden sein muß, und daß das Rohr innen hohl sein sollte, um Anfeuchtungsflüssigkeit ggf. hindurchführen zu können. Bei dem hier ausgewähltem Beispiel ist der Durchmesser des Rohres 120 etwa 1/4 der Durchmessererstreckung der Schnecke. Dieses Verhältnis hat sich als besonders zweckmäßig erwiesen.

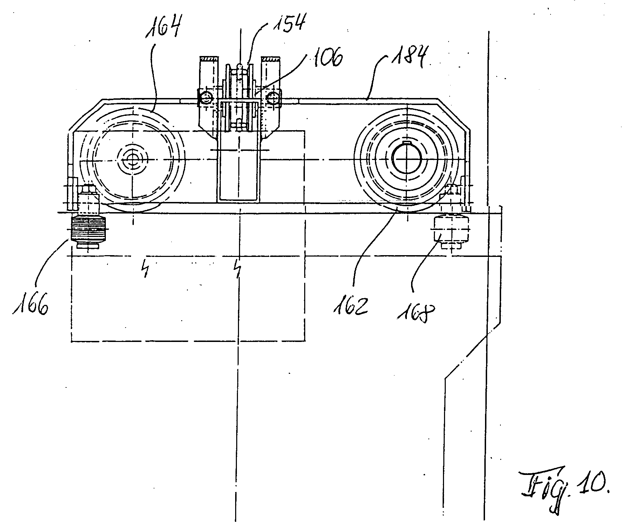

Das Rohr 120, an dessen oberen Ende die beiden Flügel 120 noch angeschweißt sind, ist dann an einem Kupplungsteil 122 angeschweißt, siehe die Schweißnaht 124, von welchem Kupplungsteil 122 ein weiteres Kupplungsteil 126 ausgeht, das innerhalb der Katze in geeigneter Weise drehbar, aber achsial unverschieblich gelagert ist. Der Antrieb erfolgt über einen Getriebemotor 128, der aus einem Elektromotor 130 und angesetztem Getriebe 132 besteht, dessen Abtriebswelle 134 beispielsweise mittels einer Keilfederverbindung mit der gelagerten Welle des Kupplungsteils 126 drehstarr in Verbindung steht. Fig. 9 zeigt den Getriebemotor 128 in einer bezüglich der Fig. 5 um 90° verdrehten Ansicht und läßt außerdem erkennen, daß auch die Kupplungsteile 122, 126 sowie die Antriebswelle 134, die durch das Getriebegehäuse 132 hindurchreicht, hohl sind, so daß am oberen Ende der Antriebswelle 134 eine Einführung 136 für beispielsweise Wasser angeordnet werden kann, die so gestaltet ist, daß sie bezüglich des Antriebswellenendes drehbar und gleichwohl wasserdicht ist. Diese drehbare Einführung für Wasser, 136, steht über eine Rohr- und Schlauchverbindung 138 mit einer geeigneten Quelle für Wasser in Verbindung, wobei infolge der Beweglichkeit der Katze 108 die Schlauchverbindung 138 zweckmäßigerweise am Brückenende auf einer Aufwickelvorrichtung 140 aufwickelbar ist, wobei diese Aufwickelvorrichtung eine Wasserschlauchtrommel mit Federantrieb sein könnte, so daß sich somit beim Verfahren der Katze in Richtung der Schlauch auf die Trommel 140 automatisch infolge der Federkraft aufwickelt, bei Bewegung weg von der Aufwickeltrommel 140 wiederum sich der Schlauch entgegen der Federkraft von dieser Trommel abwickelt.

Von der Trommel führt dann wiederum mit einer drehbaren Einführung eine Schlauchverbindung zu einem festen Anschluß, wobei jedoch wiederum die Bewegung der Brücke in geeigneter Weise ermöglicht wird, beispielsweise wiederum durch eine Schlauchaufwickelvorrichtung in ähnlicher Weise, jedoch um 90° gedreht angeordnet.

Auf der anderen Seite der Brücke ist bei 142 eine Aufwickeleinrichtung 142 für ein Elektrokabel vorgesehen, wobei die Elektrokabeltrommel wiederum mit einem Federantrieb versehen sein kann, der in ähnlicher Weise arbeitet wie der Antrieb für die Schlauchtrommel 140. Das Elektrokabel ist in Fig. 9 mit 144 bezeichnet und führt zu dem Motor 128 (bzw. zu den zwei von der Katze 132 getragenen Motoren 128).

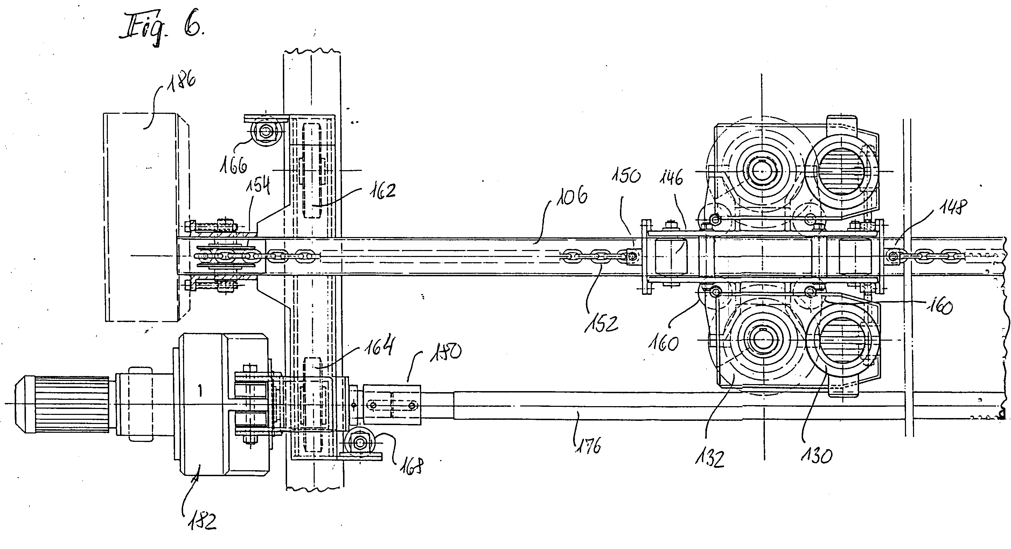

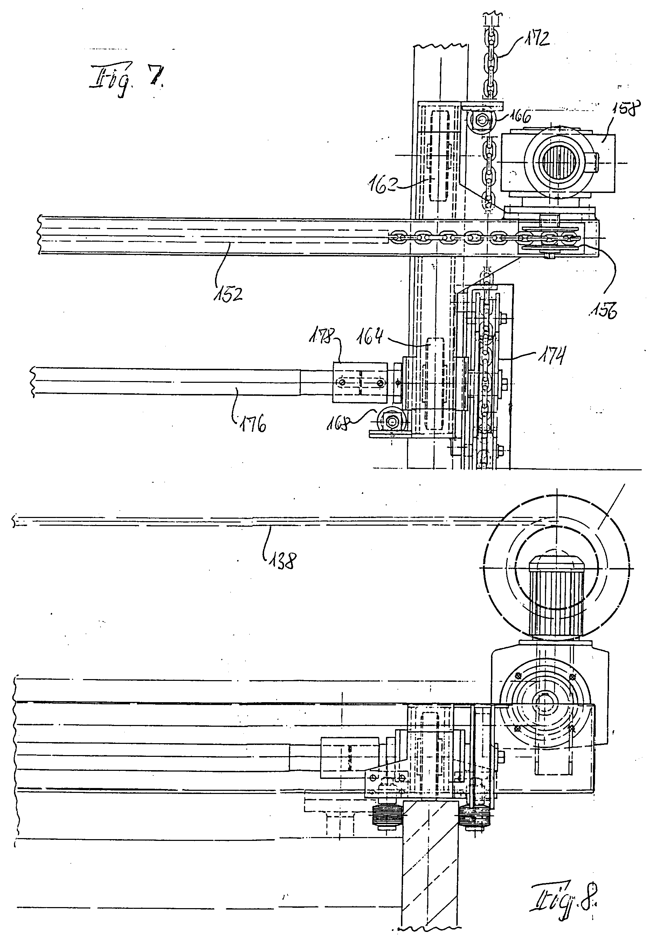

Die Katze 108 besitzt zwei Laufrollen 146, die im Gehäuse der Katze 108 derart gelagert sind, daß die Katze auf der schienenartigen Oberfläche 106 der Brücke 104 in Brückenlängsrichtung verfahren werden kann, und zwar z. B. dadurch, daß an den beiden Enden der Katze an den Punkten 148, 150 Antriebsseile oder Antriebsketten angeschlossen sind, mit denen die Katze nach (bezüglich der Fig. 9) rechts bzw. links gezogen werden kann. Dieses Antriebsseil, das mit 152 angedeutet ist, ist am Ende der Brücke um eine Seilrolle 154 geschlungen und wird von dort zum anderen Ende der Brücke geführt, siehe Fig. 2, wo das Seil erneut um eine Rolle 156 herumgeführt ist und zum Anschluß 148 der Katze zurückgeführt ist. Die Katze kann somit entlang der Brückenerstreckung dadurch bewegt werden, daß eine oder beide der Rollen 154, 156 durch geeignete Antriebseinrichtungen angetrieben wird. Wie aus Fig. 7 zu erkennen ist, erfolgt bei der hier dargestellten Ausführungsform der Antrieb über das Seilrad 156, wobei das "Seilrad" in Wahrheit ein Kettenrad ist, über dem eine Kette 152 geschlungen ist. Das Kettenrad hat gegenüber dem Seilrad den Vorteil, daß ein Schlupf unterbunden werden kann. Der Antrieb des Kettenrades 156 erfolgt über einen Getriebemotor 158, der gleichzeitig ein Bremsmotor ist, so daß gewünschtenfalls die Katze auch an Ort und Stelle gehalten werden kann, selbst wenn die von der Katze getragene Pflugschnecke sich in das Filtermaterial eingräbt und dabei die Kette 152 auf Zug und damit das Kettenrad 156 auf Drehung belastet. Zur besseren Stabilisierung der Lagerung der Katze 108 trägt das Katzengehäuse auch noch seitlich an der Brücke entlang fahrende Laufrollen 160 (in Fig. 6 sind jeweils beidseitig der Brückenschiene 106 laufende zwei Rollen 160, insgesamt also vier Rollen 160 zu erkennen).

Eine ähnlich Rollenführung ist auch für die Brücke 104 auf den von den Seitenwänden 94 gebildeten Schienen 106 vorgesehen. So rollt auf der Oberfläche 106 der Seitenwand 94 auf der die Kabeltrommel 142 tragenden Seite der Brücke 104 ein Paar von Laufrädern 162, 164, und entsprechende Laufräder 162, 164 sind am anderen Ende der Brücke angeordnet, wie Fig. 7 erkennen läßt. Die Seitenführung wiederum wird von Laufrädern 166, 168 erreicht, die sich seitlich der Wand 94 abstützen und beispielsweise in Fig. 9 dargestellt sind, siehe aber auch Fig. 6.

Die seitlich führenden Laufräder 166, 168 der Brücke 106 sind so angeordnet, daß sie den Bewegungsweg der Katze 108 bis zum weitest möglichen Fahrweg in Richtung auf die Wände zu nicht behindern, daß bedeutet, daß das auf der Seite der Katze angeordnete Laufrad 168 soweit außerhalb der Brückenschiene 106 liegt, daß die Katze mit ihrem am weitesten ausladenden Teilen an diesem Laufrad vorbeifahren kann. Das andere Laufrad 166 befindet sich ohnehin auf der anderen Seite der Seitenwand, so daß dieses Laufrad ohnehin dem Bewegungsweg der Katze, der dann nur noch durch die Seitenwand begrenzt wird, nicht beeinträchtigt.

Aus dem gleichen Grunde ist gemäß Fig. 9 die Elektrokabeltrommel 142 und andere Anordnungen der Brücke soweit über den Bereich der Seitenwand 94 nach außen gerückt, daß sie die Bewegung der Katze bis zum Anstoßen des Schneckenpfluges an der Wand 94 nicht im Wege stehen.

Die Bewegung der Brücke auf den Wänden 94 könnte dadurch erfolgen, daß die Laufräder 162, 164 Zahnräder sind, die in entsprechende Zahnstangen eingreifen, die beispielsweise auf der Oberseite der Wände 94 angeordnet sind. Bei der hier dargestellten Ausführungsform ist stattdessen eine Kette 172 parallel und außerhalb der einen der beiden Wände 94 (hier ist es gemäß Fig. 7 die "rechts" liegende Wand) angeordnet, und von der Brücke wird koaxial zu dem einen Laufrad 164 ein Kettenrad 174 getragen, das mit der Kette 172 in Eingriff steht. Treibt man dieses Kettenrad an, zieht sich die Brücke entlang der Kette von einem Ende der aufgehängten Kette zum anderen Ende, wobei dann die Brücke von einem Ende des Filterbettes zum anderen Ende verfahren werden kann. Der Antrieb des Kettenrades 174 erfolgt hier mittels einer Antriebswelle 176, die an ihrem einen Ende über ein Kupplungsglied 178 mit einem das Kettenrad 174 lagernde Gehäuse verknüpft ist, auf dem anderen Ende über ein weiteres Kupplungsglied 180 mit einem bremsbaren Getriebemotor 182. Die Welle 176 ist ausreichend weit weg von der Brückenschiene 106 angeordnet, so daß sie die Bewegung der Katze 108 nicht behindert.

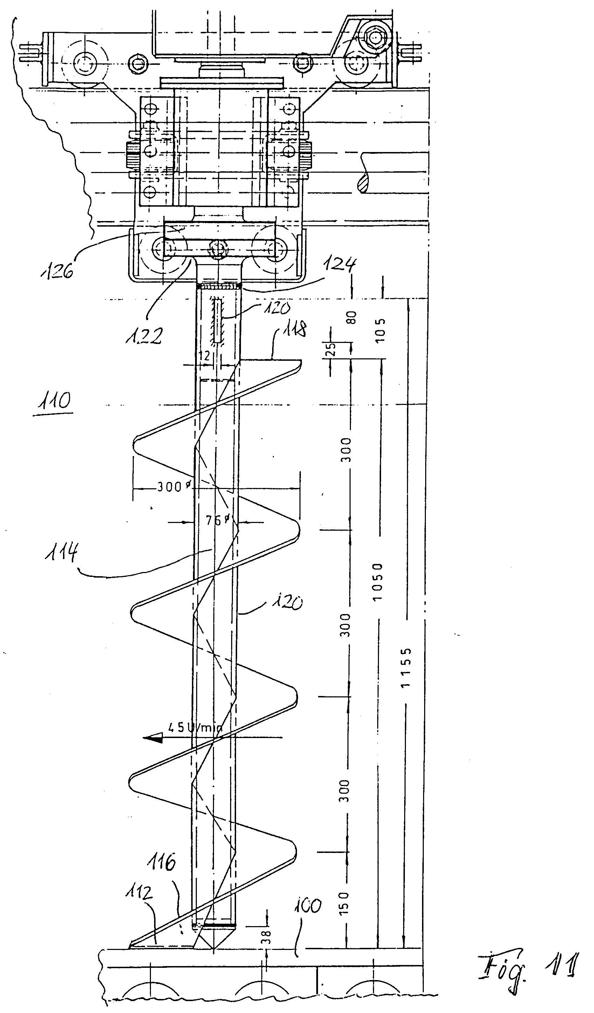

Die Welle 176 kann aus Vollmaterial, vorzugsweise aber aus Hohlmaterial bestehen, ebenso wie die Brückenschiene 106 aus, wie Fig. 10 erkennen läßt, rechteckigem Hohlprofil besteht. Dadurch wird das Gewicht der Anordnung reduziert, bei gleichzeitig ausreichender Steifigkeit.

Auch das die Laufräder 164, 162 tragende Ende der Brücke ist gehäuseartig und besteht somit vorzugsweise aus Stahlblechteilen, siehe die Bezugszahl 184, so daß auch hier Gewichtseinsparungen möglich sind. Die eine Seite der Brücke trägt noch, wie Fig. 6 beispielsweise erkennen läßt, einen Elektroschaltkasten 186, an dem das Elektrokabel 144 angeschlossen sein mag, wie auch die Anschlüsse für die Getriebemotoren 128, 158 und 182.

Es sei noch erwähnt, daß der Wasserzulauf über den Anschluß 136 das hohle Axialrohr 114 der Pflugschnecken gemäß Fig. 5 mit Wasser füllt, so daß durch geeignete Anbringung von Durchbrüchen in diesem Hohlrohr das Wasser dann austritt, wobei die Anordnung der zum Austreten des Wassers vorgesehenen Durchbrüche je nach Zweckmäßigkeitsgründen gewählt werden kann. So können diese Durchbrüche über die axiale Erstreckung der Achse 114 gleichmäßig oder auch ungleichmäßig verteilt sein, um so eine graduelle Verstärkung des Wasseraustritts von unten nach oben zu ermöglichen, oder auch umgekehrt. Dieser Wasserzutritt dient dazu, je nach Bedarf die aufzulockernde Biomasse gleichzeitig auf einen gewünschten Feuchtegrad zu bringen.

Die Antriebsgetriebemotoren können so gestaltet sein, daß sie beispielsweise die Pflugschnecken mit einer Drehgeschwindigkeit von 30 bis 60 Umdrehungen pro Minute betätigen, vorzugsweise mit einer Drehgeschwindigkeit von z. B. 45 U/m. Die Getriebemotoren ihrerseits könnten so ausgelegt sein, daß sie die Welle 176 mit einer Umdrehungszahl von z. B. 2 bis 3 U/m, vorzugsweise mit 3,5 U/m rotieren lassen (Getriebemotor 182 für den Antrieb der Brücke). Je nach Anzahl der Kettenglieder und der Zahnzahl des Kettenrades führt dies zu einer bestimmten Laufgeschwindigkeit der Brücke, die z. B. 1...3 Meter pro Minute betragen mag. Eine entsprechende Geschindigkeit könnte der Getriebemotor für die Katze der Katze aufdrücken, so daß es möglich ist, innerhalb von verhältnismäßig kurzer Zeit das Filterbett entweder in mehreren aufeinanderfolgenden Längsstreifen oder entsprechenden Querstreifen zu Bearbeiten und so das gesamte Filterbett innerhalb einer bestimmten Zeitdauer von beispielsweise 1 bis 2 Stunden aufzulockern. Dieser Auflockervorgang kann dann innerhalb einer bestimmten Wiederholungsfrist erneut durchgeführt werden, beispielsweise zu Beginn einer jeden Arbeitsschicht am Morgen eines Arbeitstages.

Die Anlage kann automatisch betrieben werden, zumal dann, wenn sowohl die Katze wie auch die Brücke jeweils End- und Umschalter aufweisen, die bei Erreichen der gewünschten Endstellungen von Katze und Brücke die Bewegung entweder hinsichtlich der Richtung ändern oder die Bewegung beenden.

Alle Stahlblechteile sind vorzugsweise mit einem Kunststoffbelag behandelt, beispielsweise mit einem Epoxydharz lackiert, um so Korrosionserscheinungen, die aufgrund des biologisch aktivem Materials besonders schnell eintreten würden, zu verhindern. Dies sollte auch für die Innenteile der rohrförmigen Anordnungen gelten, sofern diese nicht nach außen hin verschlossen sind.

## Patentansprüche

1. Verfahren zur biologischen Behandlung von Abgasen, insbesondere solchen, die Feinstaub und/oder Kohlenstoffpartikel enthalten, wobei die Abgase zunächst angefeuchtet und dann durch biologisches Filtermaterial hindurchgeleitet werden, dadurch gekennzeichnet, daß das bilogische Filtermaterial (50) ständig oder in bestimmten zeitlichen Abständen mechanisch aufgelockert wird.

2. Verfahren nach Anspruch 1, wobei das biologische Filtermaterial (50) durch Zuführen von Wasser auf einer bestimmte Feuchtigkeit gehalten wird, dadurch gekennzeichnet, daß das Zuführen von Wasser vor oder während des Auflockerns erfolgt.

3. Verfahren nach Anspruch 1 oder 2, wobei der elektrische Widerstand des Filtermaterials (50) gemessen wird, dadurch gekennzeichnet, daß der Meßwert zur Festlegung des Zeitpunktes des Auflockerns dient.

4. Verfahren nach einem der Ansprüche 1 bis 3, dadurch gekennzeichnet, daß der Zeitpunkt des Auflockerns durch Messung des Feuchtigkeitsgehalts und/oder Schadstoffgehalts des aus dem biologischen Filtermaterial (50) austretenden gereinigten Gases ermittelt wird.

5. Verfahren nach einem der Ansprüche 1 bis 3, dadurch gekennzeichnet, daß der Zeitpunkt des Auflockerns durch Messung des Druckabfalls des zu reinigenden Gases in dem biologischen Filtermaterial (50) ermittelt wird.

6. Verfahren nach einem der Ansprüche 1 bis 5, dadurch gekennzeichnet, daß das Auflockern dadurch geschieht, daß das biologische Filtermaterial (50) durch ein mechanisches Werkzeug in einem begrenzten Bereich vertikal noch oben befördert und dann seitlich von dem Werkzeug wieder nach unten fallengelassen wird, und daß das Werkzeug während der Förderung des Materials nach oben in einem abtastendem Muster über die Fläche des Filterbettes geführt wird.

7. Verfahren nach Anspruch 6, dadurch gekennzeichnet, daß die Abtastbewegung dadurch erreicht wird, daß das Werkzeug über der Oberfläche des Filterbettes unter sukzessivem Vorrücken in einer ersten Richtung entlang von Streifen entlang einer dazu senkrechten zweiten Richtung geführt wird.

8. Verfahren nach einem der Ansprüche 6 bis 7, dadurch gekennzeichnet, daß die vertikale Bewegung nach oben durch eine schneckenartige Form des Werkzeugs erfolgt, während die Bewegung des Herabfallens dadurch bewirkt wird, daß dem biologischen Filtermaterial nach der Aufwärtsbewegung eine radial nach außen gerichtete Bewegung aufgedrückt wird.

9. Einrichtung zur biologischen Behandlung von Abgasen, bestehend aus einer Kammer (28), in die das Abgas gegen einen Sprühstrahl aus einer Anfeuchtungsflüssigkeit, wie Wasser, mittels eines Gebläses (16) eingeblasen wird, und mit einem der Kammer (28) über eine Leitung (46) nachgeschaltetem biologischem Filterbett (48), in dem durch Mikroorganismen störende, insbesondere stark riechende Bestandteile der Abgase biologisch abgebaut werden, dadurch gekennzeichnet, daß im Bereich des Filterbettes eine mechanische Auflockereinrichtung vorgesehen ist.

10. Einrichtung nach Anspruch 9, dadurch gekennzeichnet, daß Meßeinrichtungen (26, 22, 30) für den Feuchtegehalt, den elektrischen Widerstandsabfall, und/oder für den Gasdruckabfall innerhalb des Filtermaterials (50) zur Feststellung der Dichte des Filtermaterials vorgesehen sind.

11. Einrichtung nach Anspruch 9 oder 10, wobei das Filterbett aus einer Wanne mit einem Boden sowie in oder unterhalb des Bodens angeordneten Gaszuführungskanälen (52), ggf. einem Abfluß oder Sumpf (58, 34) für abgeschiedene Flüssigkeit und einer Filterbettfüllung (50) aus biologisch wirksamen Filtermaterial besteht, dadurch gekennzeichnet, daß oberhalb der Wanne eine Führung für ein Werkzeug angeordnet ist, mittels dem das in der Wanne befindliche Filtermaterial (50) sukzessive auflockerbar ist.

12. Einrichtung nach Anspruch 11, dadurch gekennzeichnet, daß das Werkzeug auf einem von den Filterbettwänden getragenen, entlang dieser Wände verschieblichen Brücke (104) und einer entlang der Brücke verfahrbaren Katze (108) getragen wird.

13. Einrichtung nach einem der Ansprüche 9 bis 12, dadurch gekennzeichnet, daß das Auflockerwerkzeug eine von einem Motor um ihre Achse drehbare, pflugartige Schnecke (110) ist, die in das Filterbett hinein bis zu dem Filterbettboden reicht.

14. Vorrrichtung nach Anspruch 13, dadurch gekennzeichnet, daß die Katze (108) zwei parallel zueinander nach unten reichende Schnecken trägt, die gleichläufig oder gegenläufig antreibbar sind.

15. Vorrichtung nach Anspruch 14, dadurch gekennzeichnet, daß die zwei Schnecken derart angeordnet sind, daß sie einen von der Brücke gebildete Träger zwischen sich aufnehmen.

16. Vorrichtung nach Anspruch 15, dadurch gekennzeichnet, daß die Katze (108) mittels zumindest zweier Auflagerrollen (146) auf der Oberseite der Rechteckquerschnitt aufweisenden Traverse (106) verschieblich gelagert ist, und daß mittels jeweils mindestens einer, vorzugsweise zweier weiterer Rollen pro Seite (160) die Katze an den beiden Seitenkanten der Traverse verschieblich (106) geführt ist.

17. Vorrichtung nach einem der Ansprüche 9 bis 16, dadurch gekennzeichnet, daß die Brücke mittels an den Brückenenden angeordneter Laufräder (162, 164) und ggf. mittels seitlich angeordneter Führungsräder (166, 168) auf der schienenartigen Oberkante von parallel zueinander verlaufenden Filterbettwänden (94) entlang des Filterbettes verfahrbar gelagert ist.

18. Vorrichtung nach einem der Ansprüche 9 bis 17, dadurch gekennzeichnet, daß die Katze (108) und die Brücke (106) jeweils einen Seil- oder Kettenantrieb aufweisen, mit dem die Katze auf der Brücke bzw. die Brücke auf den von den Filterbettwänden getragenen Schienen verfahrbar ist.

19. Vorrichtung nach Anspruch 18, dadurch gekennzeichnet, daß der für die Katze (108) vorgesehene Antrieb eine schleifenartig, parallel zur Brückenerstreckung (106) um Kettenräder geschlungene Kette (152) ist, die an ihren Enden an sich gegenüberliegenden Befestigungspunkten (148, 150) der Katze befestigt ist, wobei die Kette um zumindest ein Kettenrad geschlungen ist, das mit einem Antriebsmotor verkuppelt ist.

20. Vorrichtung nach Anspruch 17 bis 19, dadurch gekennzeichnet, daß die Brücke an zumindest einer Seite ein Kettenrad trägt, das mit einer parallel zu einer Filterbettwand gespannten Kette kämmt, und daß dieses Kettenrad mittels eines Getriebemotors antreibbar ist.

21. Vorrichtung nach einem der Ansprüche 9 bis 20, dadurch gekennzeichnet, daß das Schneckenpflugwerkzeug (110) eine hohle Welle aufweist und an ihrem oberen Ende eine Einführung für Befeuchtungsflüssigkeit (Wasser) aufweist, sowie oberhalb des oder im Bereich der Schnecke Öffnungen besitzt, um die Flüssigkeit in das Filterbettmaterial austreten zu lassen.

22. Vorrichtung nach einem der Ansprüche 9 bis 21, dadurch gekennzeichnet, daß oberhalb der Schnecke radial sich erstreckende Flügel angeordnet sind.
